# EUROPEAN PATENT APPLICATION

(11) **EP 4 134 152 A1**
(43) Date of publication of application: **15.02.2023**
(21) Application number: 21190802.5
(22) Date of filing: 11.08.2021
(51) Int. Cl.: B01D 53/14

(54) **ELECTROCHEMICAL METAL REMOVAL**

(71) Applicant: NEDERLANDSE ORGANISATIE VOOR TOEGEPAST- NATUURWETENSCHAPPELIJK ONDERZOEK TNO, 2595 DA 's-Gravenhage (NL)
(72) Inventor: VERONEZI FIGUIREDO, Roberta, 2595 DA 's-Gravenhage (NL); GARCIA, Amanda Cristina, 2595 DA 's-Gravenhage (NL); MARATHE, Dhruva Ajit, 2595 DA 's-Gravenhage (NL); PEREZ GALLENT, Elena, 2595 DA 's-Gravenhage (NL); GARCIA MORETZ-SOHN MONTEIRO, Juliana, 2595 DA 's-Gravenhage (NL); GOETHEER, Earl Lawrence Vincent, 2595 DA 's-Gravenhage (NL)
(74) Representative: V.O.

(57) **Abstract**

The invention is in the field of CO₂ capture. In particular the invention relates to a method for capturing CO₂ from a CO₂-containing feed gas stream, wherein the method comprises at least partially removing dissolved transition metal ions by electroreduction. The invention further relates to a system for the method.

## Description

The invention is in the field of CO₂ capture. In particular the invention relates to a method to remove metal ions from a solvent from CO₂ capture processes, and a system for the method.

It is widely acknowledged that it is desirable to minimize carbon dioxide emission and move towards a sustainable economy. A method to minimize emission is to capture and optionally regenerate the carbon dioxide. Conventional CO₂ capture include processes as described in US1783901 and for absorption based technologies the carbon dioxide containing gas (*e.g.* a flue gas) is fed to an absorber wherein it is contacted with a solvent. The solvent are typically amine-based aqueous solvents, such as alkanolamines. The CO₂ reacts with the solvent to form *i.a.* carbamate and/or carbonate and/or bicarbonate ions and protonated alkanolamines, and a CO₂-lean gas which leaves the absorber. The CO₂-rich stream can be fed to a regenerator (*e.g.* stripper), wherein typically a reboiler is present at the bottom to remove the CO₂ from the solvent. Typically, the highest temperature in the regenerator is around 120°C.

The high temperature in the stripper can cause degradation of the amine (thermal degradation). Moreover, the feed gas typically comprises oxygen and the presence of oxygen cause solvent degradation (*e.g.* through an oxidative degradation pathway). As described *i.a.* by H. Liu & G. Rochelle (Oxidative degradation of amine solvents for CO₂ capture, Master Thesis UT Austin (2015)), the oxidative degradation pathway is the main degradation mechanism and it is responsible for about 70% of total amine losses. This may be severe and a wide variety of volatile products (*e.g.* ammonia) and heat-stable salts can be formed. Further, the degradation products can be corrosive to the material of the CO₂ capture plant (*i.a.* absorber, regenerator, pipes), which typically comprise stainless steel. The corrosion may be monitored by the amount of metal that originate from the material of the CO₂ capture plant. The particular metals and what metal may be predominantly present may for instance depend on *i.a.* the type of stainless steel and/or the degree of stainless steel. Typically, iron, chromium and nickel can be found as dissolved ions in the capture solvent. The dissolved metal ions can further be considered as a catalyst for the oxidative degradation, which will subsequently lead to more degradation and that will lead to more corrosivity of the solvent. This cycle can be considered as an autocatalytic process.

To recover the solvent quality by removing impurities, reclaiming processes can be employed. Reclaiming processes are typically operated batch-wise and may be costly.

An example of a solvent reclaiming process is thermal reclaiming, wherein heat is used to distill a part of the non-degraded solvent (*e.g.* amines) from the solution. However, more solvent may degrade during the reclaiming and thermal reclaiming is typically paired with significant losses of the non-reclaimed solvent. Additionally, thermal reclaiming is energy intensive and typically results in a hazardous waste stream comprising impurities, degradation products and salts. A further drawback is the limited throughput, roughly 1-2% of the total solvent flow can be subjected to thermal reclaiming.

Another method comprises ion-exchange resins, which are often used to remove charged contaminants. The principle is based on the use of cation exchange resins to replace cationic species with protons and anion exchange resins to replace anionic species with hydroxyl ions. An example hereof is disclosed in US4795565. Herein heat stable salts are removed from ethanolamine gas purification process units using ion-exchange resins. A further example, in particular for anion exchange resins, is disclosed in EP0430432. Herein an alkanolamine solution containing heat stable alkanolamine salts of acidic anions is contacted with an anion exchange resin to remove the acidic anions. Small amounts of metal cations may also be captured by the resin. However, ion-exchange resins may require aggressive regeneration cycles, typically leading to large amounts of strong acids and bases that have to be recycled or disposed of. Accordingly, the use of ion-exchange resins may be paired with increasing complexity of the solvent and waste management. Additionally, there is typically a risk that some of the carbamate ions and protonated alkanolamines are captured by the resins.

A further example is electrodialysis. Electrodialysis can be employed to remove charged species from aqueous solvents. Herein a stack of alternating cation exchange membranes and anion exchange membranes are typically used to drive charged species through the selectively permeable membranes under an applied potential difference. A drawback of using electrodialysis is membrane fouling which increases ohmic resistance and accordingly reduces efficiency. Additionally, the carbamate ions and protonated amines may permeate through the membranes leading to a loss of solvent. This may be particularly unbeneficial at high CO₂ loading as a high concentration of carbamate and protonated amines may be present.

A need however remains on the removal of the metal ions as these seem to be a major contributor to solvent degradation. One way to remove metal from an amine-based solvent from a CO₂ capture process is disclosed in US2015/0258497. Herein a metal ion chelator is used to form a coordination complex with the metal ion. However, the metal ion chelator is in the form of a resin which requires the use of chemical eluents for the regeneration of the chelator and accordingly creates another waste stream or, alternatively, requires frequent refreshing of the chelator. Additionally, with increasing cationic amine species the selectivity of the chelator may decrease.

Activated carbon is also a proposed solution to remove degradation products from CO₂ capture solvents. The throughput is variable, from approximately 1-2% up to 10-20% of the total solvent flow. In a campaign at a large pilot plant operating with monoethanolamine, no effect of the active carbon on the iron content was observed (Morken et al. International Journal of Greenhouse Gas Control (2019) Vol. 82 175-183). Further, the activated carbon typically needs to be replaced or regenerated. As the activated carbon may absorb degradation compounds safety issues are typically associated with replacing the activated carbon.

It is an object of the present inventors to provide an improved method for removing transition metal ions (herein also referred to as metal ions) from CO₂ capture liquids that overcomes at least part of the above-mentioned drawbacks. The present inventors surprisingly found that such a method can be obtained by using electroreduction of the metal ions.
Figure 1 illustrates a schematic flow-chart of a preferred method according to the present invention.
Figure 2 illustrates a schematic flow-chart of a preferred method according to the present invention.
Figure 3 illustrates an electrochemical cell suitable for the method according to the present invention.
Figure 4 illustrates a bipolar membrane suitable for the method according to the present invention.
Figure 5-10 illustrate schematic overviews of alternative embodiments of a system according to the present invention.
Figure 11 illustrates a schematic overview of a preferred system according to the present invention.
Figure 12 illustrates the iron concentration over time at different cell potentials.
Figure 13 illustrates the iron concentration over time for different starting concentrations..
Figure 14 illustrates the iron concentration over time for different starting concentrations and long-term operation (> 20h).

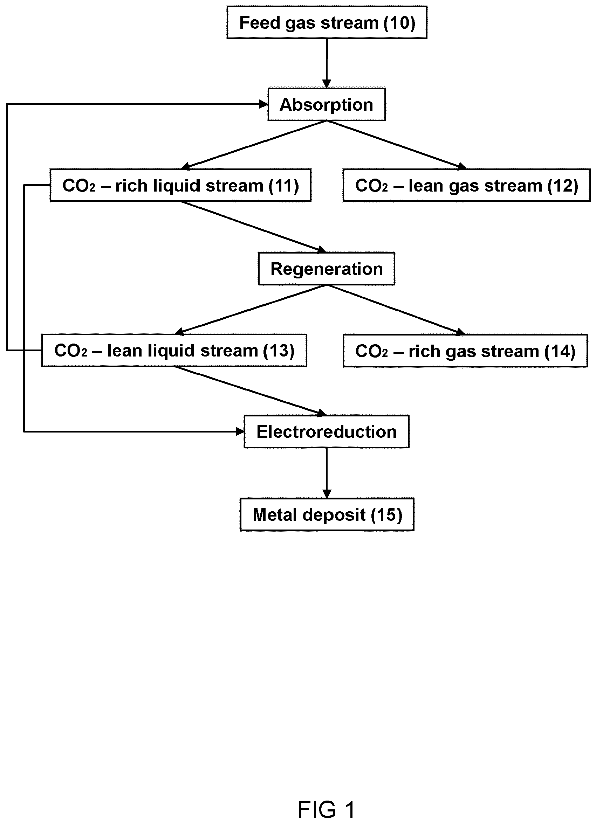

Thus, in a first aspect the present invention is directed to a method for CO₂ capture from a CO₂-containing feed gas stream (10). The method is schematically illustrated as flow-chart in Figure 1. The method accordingly comprises providing the feed gas stream in an absorber (101) comprising an solvent to absorb CO₂ in the solvent to obtain a CO₂-rich solvent stream (11) and a CO₂-lean gas stream (12). The solvent typically reacts with the CO₂ present in the feed gas. The CO₂-rich solvent stream can be led to a regenerator (104). In the regenerator the reaction of the solvent with CO₂ is typically reversed to obtain a CO₂-lean solvent stream (13) and a CO₂-rich gas stream (14). Further illustrated in Figure 1, the CO₂-lean solvent stream is preferably led back to the absorber. Generally, oxygen is present in the feed gas which may cause solvent degradation. The solvent degradation products can be corrosive. This can lead to the generation of metal ions into solution. The origin of the metal ions can be from the metallic parts of the capture plant (e.g. absorber, heat exchangers, stripper, piping, packing material). Accordingly, the CO₂-rich solvent stream and/or the CO₂-lean solvent stream comprise dissolved transition metal ions. The method further comprises at least partially removing these dissolved transition metal ions. Removal of the dissolved metal ions comprises electroreduction of the dissolved transition metal ions in an electrochemical cell (1) to obtain a metal deposit (15).

The method may be performed at ambient temperature and pressure, but as well at temperature and pressure conditions present in the capture plant. The method according to the present invention may allow for a reduced waste management, avoid fast degradation of the solvents and increase the lifetime of both solvent and industrial equipment.

The CO₂-containing feed gas stream may be any feed gas that comprises carbon dioxide. Examples include, but are not limited to flue gasses from industrial processes, air, exhaust gasses and natural gas. The feed gasses may further comprise other gasses such as molecular oxygen and/or molecular nitrogen.

The feed gas enters an absorber in which during use a solvent is provided and reacts with the carbon dioxide to absorb the CO₂. Such solvents typically comprise amine-based solvents. Preferably the solvent comprises a CO₂ capture solvent (*i.e.* a liquid that reacts with the CO₂), herein also referred to as capture solvent. Examples of suitable CO₂ capture solvent include amine-based liquids such as piperazine, glycol-based liquids and/or liquids comprising an amino-acid. More specific examples are for instance alkanolamines, such as monoethanolamine (MEA), aminomethyl propanol (AMP), methyl diethanolamine (MDEA)and combinations thereof such as a blend of 27 wt% AMP and 13 wt% piperazine (CESAR1). The CO₂ reacts with such solvents to produce *i.a.* charged species, in particular carbamate, bicarbonate and carbonate ions and protonated amines. Accordingly, the solvent streams typically comprises these solvents. The solvent may further comprise water but it may also be anhydrous. The solvent may for instance be an aqueous solution of MEA.

It may be preferred to subject the CO₂-lean solvent stream to electroreduction. Considering MEA as capture solvent, for example, the CO₂-lean loading is preferably around 0.2mol CO₂/mol amine.

The CO₂ plant, in particular the absorber, regenerator and/or the pipes, typically comprise stainless steel housing. Accordingly, the corrosion due to the degradation products typically result in the release of transition metal ions in the liquid. These transition metal are typically iron cations, nickel cations, chromium cations, cobalt cations and/or manganese cations. Cations are herein used to refer to any individual or combination of oxidation states of the metal. For instance iron cations refer to Fe(II), Fe(III), Fe(IV) and/or Fe(VI). Similarly, nickel cations may refer to Ni(I), Ni(II), Ni(III) and/or Ni(IV). Chromium cations is used for Cr(I), Cr(II), Cr(III), Cr(IV), Cr(V) and/or Cr(VI). Cobalt cations may refer to Co(I), Co(I), Co(III), Co(IV) and/or Co(V). Manganese cations may be Mn(I), Mn(II), Mn(III), Mn(IV), Mn(V), Mn(VI) and/or Mn(VII). Generally, in the solvent the metal ions include Fe(II), Fe(III), Ni(II), Ni(III), Cr(III), Cr(VI), Co (II), Co(III) and/or Mn(II). Typically, the metal ions are iron cations, nickel cations and/or chromium cations, mainly iron cations. Iron cations are typically present in higher concentrations and accordingly, the transition metal cations are typically Fe(II) and/or Fe(III). The Roman numerals in the brackets indicate the oxidative state, *e.g*. Fe(II) is Fe²⁺.

Typically, the transition metal concentration in the CO₂-rich solvent stream and/or the CO₂-lean solvent stream depends on the nature of the feed gas and solvent used. For a stable operation with minimal corrosion and degradation, a metal concentration of less than 5 mg/kg is typically preferred. If no reclaiming process is used, the iron concentration increases over time, typically reaching values much higher than 5 mg/kg, up to 50-100 mg/kg, a point at which operation of the plant needs to be stopped. Accordingly, the method of the present application can be applied to a transition metal concentration in the CO₂-rich solvent stream and/or the CO₂-lean solvent stream of at least 5 mg/kg, preferably at least 15 mg/kg, such as at least 20 mg/kg..

The dissolved metal ions are at least partially removed through electroreduction of the dissolved transition metal ions in an electrochemical cell (1) to obtain a metal deposit. Electroreduction is generally based on the application of an electric current or a reductive potential to discharge cationic species in an electrolyte via an electron-accepting step at the cathode. The electroreduction is carried out in an electrochemical cell. The cells typically comprise a cathode and an anode that are separated by an electrolyte and/or membrane. Additionally, as conventional in the art, the cell may comprise one or more reference electrodes that may be used to control the cathode and/or anode potential. The process can be run galvanostatically (*i.e.* by applying a current) or potentiostatically (*i.e.* by applying a potential on either the cathode, anode or cell).

During electroreduction, a reductive potential or a reductive current is typically applied to the cathode. The reductive potential or current may be specifically chosen such that it allows for the selective reduction of the targeted species (*i.e.* the metal ion(s)). Accordingly, the reductive potential typically varies depending on the conditions such as the cathode material, the cation(s) to be reduced and the electrolyte composition. Generally, the reductive potential applied at the cathode is preferably between -3 and 3V vs Ag/AgCl, preferably between 0 and -3V vs Ag/AgCl. As an example, for the reduction of Fe(II) to Fe(0) on a graphite electrode in a 30% MEA aqueous solution with Ag/AgCl as reference electrode, the reductive potential applied may be between -0.8 and -1.5V, such as between -1.0 and -1.4V. This potential is particularly favorable for reduction of iron cations. Further, the reduction potential may be amended over time, to for instance first reduce a first metal followed by the reduction of a second metal. Alternatively or additionally, multiple electrochemical cells may be employed to selectively reduce the individual metal ions. As the metals may be similar (*i.e.* close in the period table) the metals may have an overlapping reduction potential that may result in the reduction of more than one metal ion at a particular applied reduction potential.

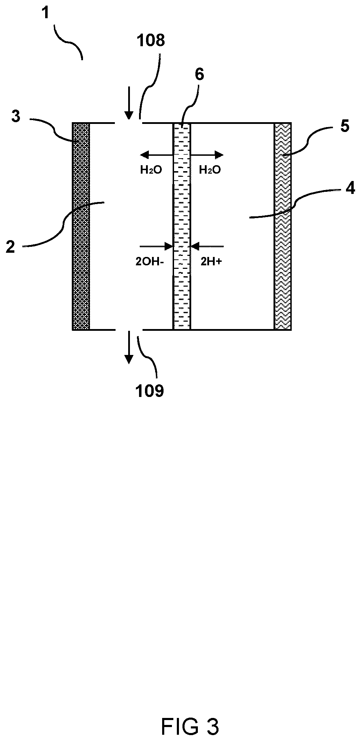

In order to minimize or prevent any losses of oxidizable species in the solvent, such as carbamate ions, amines or protonated amines, the electrochemical cell is preferably a two-compartment electrochemical cell. However, a one-compartment cell comprising a cathode and an anode may suffice for a capture solvent that is stable. A suitable two-compartment electrochemical cell is illustrated in Figure 3. The two-compartment electrochemical cell preferably comprises a cathodic compartment (2) comprising a cathode (3) and an anodic compartment (4) comprising an anode (5). Further, the electrochemical cell preferably comprises a bipolar membrane (6) that separates the anodic compartment and the cathodic compartment. The reduced losses of charged species may contribute to an increased solvent stability, such as increased lifetime and electrochemical stability of the solvent.

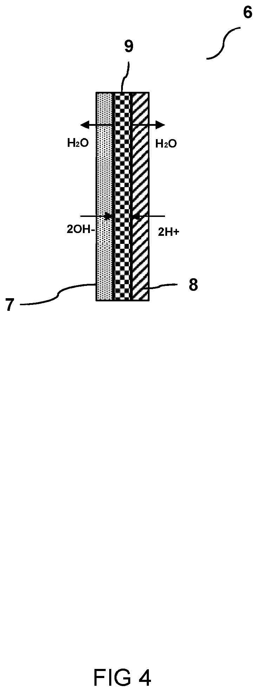

A bipolar membrane is schematically illustrated in Figure 4. The bipolar membrane (6) typically comprises an anion exchange layer (AEL) (7), a cation exchange layer (CEL) (8) and an interface layer (9). Cation exchange layers are typically permeable to cationic species and anion exchange layers are typically permeable to anions. The interface layer can generally be considered a bipolar junctional and forms the interface between the CEL and AEL. Different morphologies for such an interface layer may be possible as can be seen in *e.g.* Parnamae et al., Journal of Membrane Science, 617, 2021, 118538. Charged species can therefore typically not be transported through all layers of bipolar membrane, however neutral species may be transported through the layers. Typically, the anion exchange layer faces the cathodic compartment. The bipolar membrane is accordingly preferably operated under forward-bias mode.

It is even more preferred that the electrochemical cell is a two-compartment electrochemical flow cell. In such a flow cell, the to be treated liquid (*i.e.* the CO₂-lean solvent and/or the CO₂-rich solvent) is typically fed to and flows through the cathodic compartment. The anodic compartment may comprise any conventional electrolyte.

In the two-compartment flow cell as illustrated in Figure 3 the to be treated liquid is provided in the cathodic compartment (2). A potential difference can be applied between the cathode and a reference electrode. Alternatively, a current can be applied. The method may accordingly be run galvanostatically or potentiostatically. A reduction potential may be applied to the cathode (3). Due to the potential at the cathode and anode (5), water may split at both the anode and cathode into H⁺ and OH⁻, respectively. Water splitting at the cathode may however be preferably minimized, as this reaction may compete with the reduction of the metal ions. Accordingly, due to the bipolar membrane only a positively or negatively charged species may permeate through the exchange layers. In other words, from the cathodic compartment only the hydroxyl anions may permeate through the anionic exchange layer but are typically blocked by the cation exchange layer. Similarly, from the anodic compartment only H⁺ may permeate through the cation exchange layer and are typically blocked by the anion exchange layer. Both ions typically meet in the interface layer. Here, the hydroxyl anions and protons may recombine and the neutral water molecules may permeate back to the anodic and/or cathodic compartments through the exchange layers.

The preferred bipolar membrane configuration may beneficially assist in resisting a pH change in the compartments as protons generated in the anodic compartment will consume the hydroxyl anions present in the cathodic compartment in the membrane interfacial layer. Further, due to the presence of the preferred bipolar membrane positively charged amines and carbamate ions are typically prevented to transport to the anodic compartment. Accordingly, oxidation of the amines is typically minimized or prevented resulting in less degradation and solvent loss. Additionally, the bipolar membrane may block metal cations to permeate through the membrane to the anodic compartment.

By applying the reduction potential or a current to the cathode, the metal cations are typically reduced. The metal cations may be reduced to *e.g.* its elemental state, hydroxide, oxide and/or oxide hydroxide. For instance, Fe(II) may accept two electrons from the cathode and form a metal deposit of elemental iron. Alternatively or additionally, the Fe(II) may form a metal deposit of iron hydroxide, iron oxide or iron oxide hydroxide. Without wishing to be bound by theory the present inventors believe that the reduced metal at the cathode may re-oxidize after the reductive potential is removed. Accordingly, the metal deposit may comprise metallic metal, metal oxide, metal oxide hydroxide and/or metal hydroxides.

Dependent on the metal deposit, the metal deposit may be removed from the electrochemical cell for instance by filtration and/or electrochemical regeneration of the electrodes. Filtration may for instance be used in case the metal deposit is not too strongly adhered to the cathode but present as *e.g.* a precipitate, while for a more strongly adhered metal deposit to the cathode the metal deposit is typically removed by electrochemical regeneration of the electrodes. The metal is typically removed from the CO₂-capture plant and thus tends to break the autocatalytic solvent degradation cycle. As the metal deposit typically forms on the cathode, the cathode may also be replaced and/or removed, cleaned or regenerated (*e.g.* scraping and/or electrochemical treatment) and placed back. The cathode may comprise any suitable material including for example carbon and/or metals such as titanium, nickel, and/or iron. Preferably, the cathode comprises graphite. Graphite electrodes are preferred as they are typically cheap. The electrode surface area may be amended to allow for a more optimal metal ion removal.

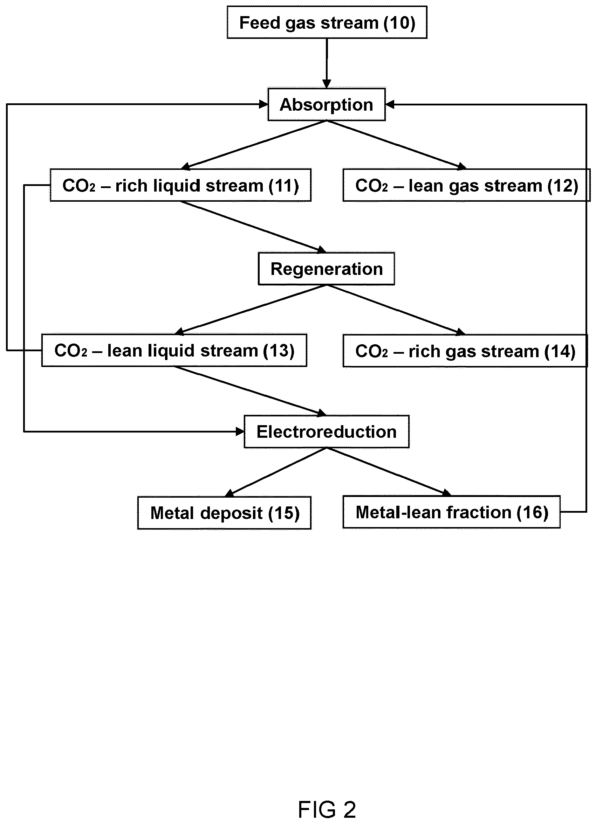

Further, as the transition metal ions are deposited a metal-lean fraction (16) remains. The metal-lean fraction typically comprises the solvent that can be reused in the absorber of the CO₂ capture system. The metal-lean fraction may accordingly be less corrosive and an increased lifetime of the industrial equipment as well as the solvent may be achieved. Accordingly, it is preferred that the metal-lean fraction is fed to the absorber. A schematic overview is illustrated in Figure 2.

In a preferred embodiment, the method is a continuous method as this typically allows for the CO₂ capture process to remain active. If the method is employed continuously, the anolyte may require occasional or continuous refreshing.

The invention is further related to a method for at least partially removing transition metal ions from a solution. The method comprises electroreduction of the metal ions in a two-compartment electrochemical cell comprising a bipolar membrane (6). The bipolar membrane separates a cathodic compartment (2) from an anodic compartment (4). Preferably wherein the anion exchange layer faces the cathodic compartment.

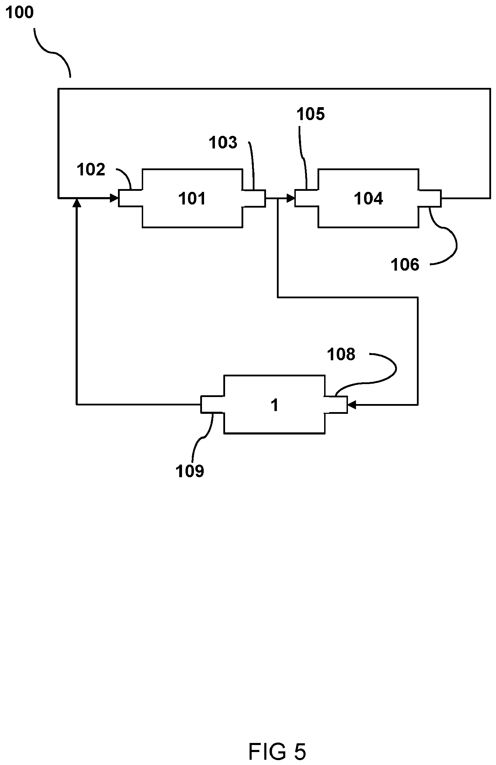

In a further aspect, the invention is related to a system (100) for the method according to the present invention. Several embodiments are illustrated in Figures 5-10. The system comprises an absorber (101) comprising a feed fluid inlet (102) and CO₂-rich solvent outlet (103). During use the absorber typically comprises an amine-based capture solvent, which can react with CO₂ (*vide supra*). The system further comprises a regenerator (104) comprising a CO₂-rich solvent inlet (105) and a CO₂-lean solvent outlet (106). Additionally, the system comprises an electrochemical cell (1) comprising a metal-rich fraction inlet (108) and a metal-lean fraction outlet (109). As can be seen in Figure 5, the CO₂-rich solvent outlet (103) is in fluid connection with the CO₂-rich solvent inlet (105) and in fluid connection with the metal-rich fraction inlet (108). The metal-lean fraction outlet (109) is in fluid connection with the feed fluid inlet (102). The metal-lean fraction obtained from the electroreduction can thus be fed (*e.g.* recycled) to the absorber. Additionally, in Figure 5 it is further illustrated that the CO₂-lean solvent outlet (106) is in fluid connection with the feed fluid inlet (102). Figure 5 accordingly illustrates that the metal removal may be employed for a part of the CO₂-rich solvent stream. It may be appreciated that the metal-lean fraction outlet (109) may also be in fluid connection with the CO₂-rich liquid inlet (105).

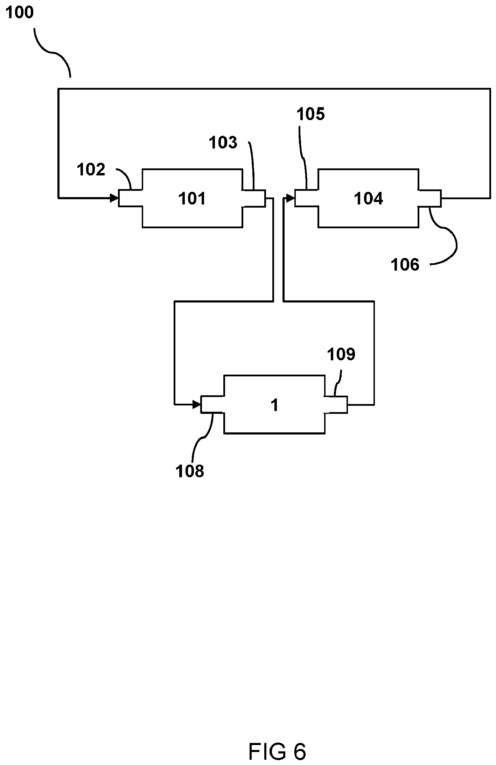

An alternative embodiment is illustrated in Figure 6, herein the CO₂-lean solvent outlet (106) is in fluid connection with the feed fluid inlet (102). The CO₂-rich solvent outlet (103) is in fluid connection with the metal-rich fraction inlet (108). The metal-lean fraction may be lead from the metal-lean fraction outlet (109) to the CO₂-rich solvent inlet (105). Accordingly, Figure 6 illustrates that all of the CO₂-rich solvent may be subjected to electroreduction.

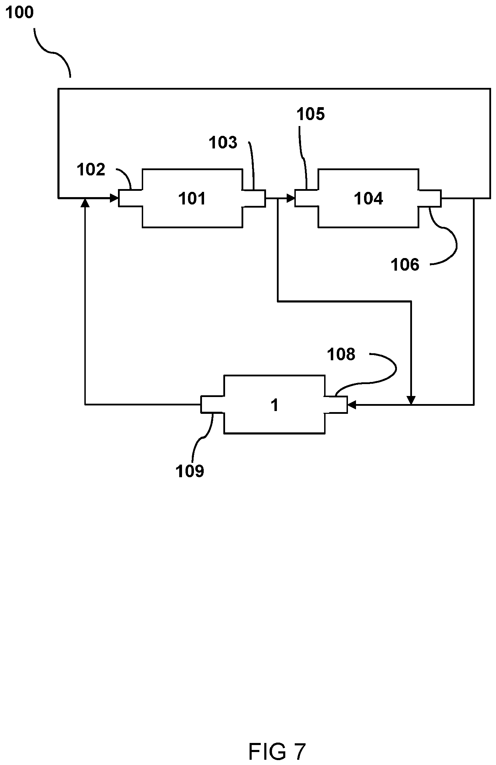

Figure 7 illustrates yet another alternative embodiment. Herein, the CO₂-rich solvent outlet (103) is in fluid connection with the CO₂-rich solvent inlet (105) and in fluid connection with the metal-rich fraction inlet (108). The CO₂-lean solvent outlet (106) is in fluid connection with the feed fluid inlet (102) and with the metal-rich fraction inlet (108). The metal-lean fraction outlet (109) is in fluid connection with the feed fluid inlet (102). Figure 7 accordingly illustrates an embodiment wherein at least part of the CO₂-rich solvent and at least part of the CO₂-lean aqueous solvent may be subjected to the electroreduction. It may be appreciated that the metal-lean fraction outlet (109) may also be in fluid connection with the CO₂-rich liquid inlet (105).

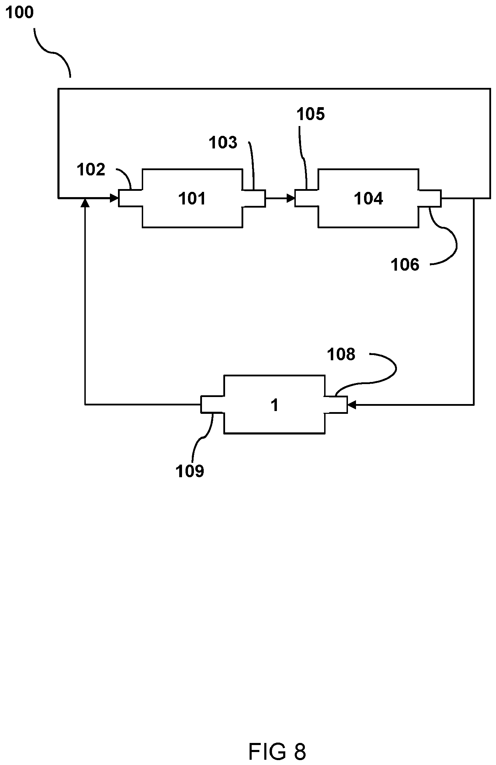

Figure 8 illustrates another alternative embodiment wherein the CO₂-rich solvent outlet (103) is in fluid connection with the CO₂-rich solvent inlet (105). The CO₂-lean solvent outlet (106) is in fluid connection with the feed fluid inlet (102) and with the metal-rich fraction inlet (108). The metal-lean fraction outlet (109) is in fluid connection with the feed fluid inlet (102). Figure 8 illustrates that at least part of the CO₂-lean solvent is subjected to electroreduction. It may be appreciated that the metal-lean fraction outlet (109) may also be in fluid connection with the CO₂-rich liquid inlet (105).

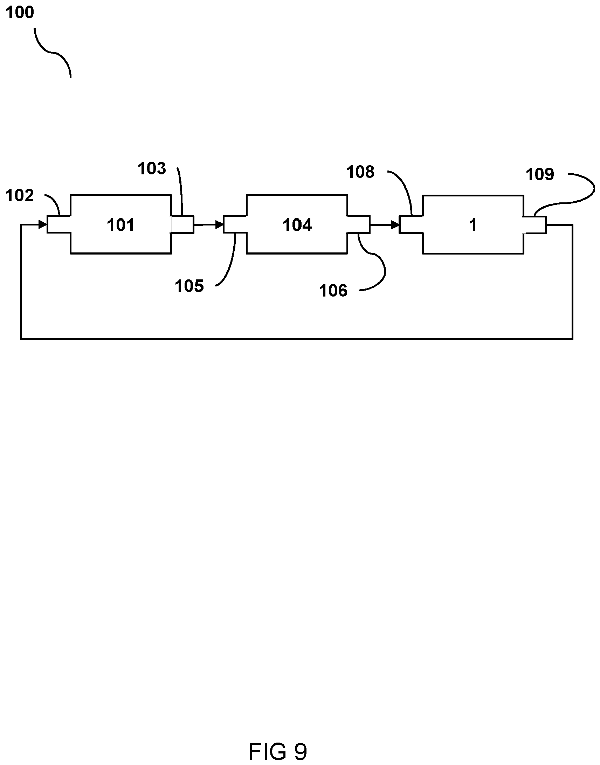

In another alternative embodiment, the electrochemical cell may be placed between the regenerator and the absorber as for instance illustrated in Figure 9. Herein the CO₂-rich solvent outlet (103) is in fluid connection with the CO₂-rich solvent inlet (105). The CO₂-lean solvent outlet (106) is in fluid connection with the metal-rich fraction inlet (108). The metal-lean fraction outlet (109) is in fluid connection with the feed fluid inlet (102). In this preferred embodiment, all of the CO₂-lean solvent is subjected to electroreduction to allow for optimal metal removal and optimal recyclability.

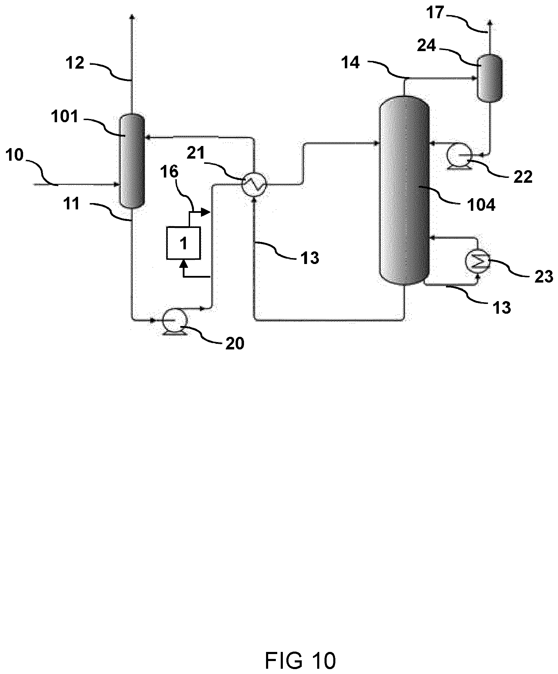

A schematic overview of a suitable system is illustrated in Figure 10. Herein several pumps (20, 22) are shown, a heat exchanger (21) and a heater (23). Further, it illustrates that the CO₂-rich gas stream (14) may be further led to a condenser (24) to obtain a CO₂ gas stream (17). The electrochemical cell (1) is placed such that at least part of the CO₂-rich solvent stream is subjected to electroreduction.

Accordingly, the electrochemical cell for the method according to the present invention may be located at any place in the solvent loop of a CO₂ capture system, to allow for *in-situ* metal removal. Part of the liquids may for instance be tapped or bypassed to be subjected to electroreduction. As at least part of the liquids is subjected to electroreduction, the metal ions may be removed from these liquids allowing for a sufficient purification to continue the process with minimal corrosion and degradation.

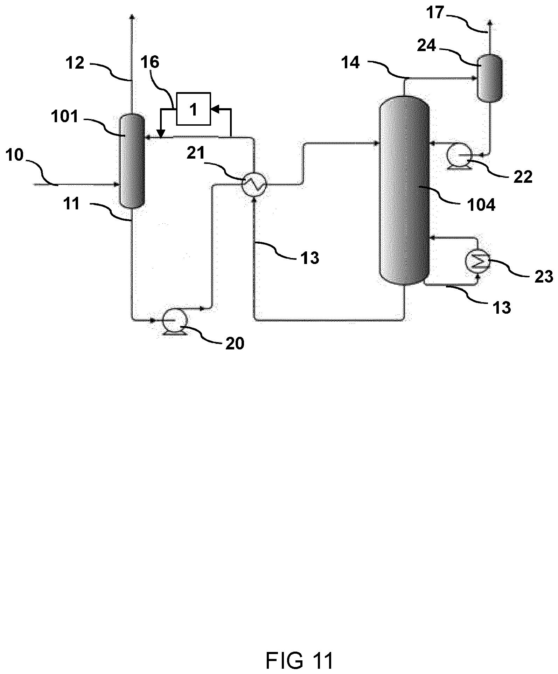

A schematic overview of a preferred system is illustrated in Figure 11. Similarly to Figure 10, several pumps (20, 22) a heat exchanger (21) and a heater (23) are shown. It further illustrates that the electrochemical cell is preferably placed such that at least part of the CO₂-lean solvent stream (e.g. a slip stream) is subjected to electroreduction.

For the purpose of clarity and a concise description features are described herein as part of the same or separate embodiments, however, it will be appreciated that the scope of the invention may include embodiments having combinations of all or some of the features described.

The invention may further be illustrated by the following nonlimiting examples.

### Example 1 - cell potential

Two batch experiments were performed using an aqueous MEA solution with approximately 30 ppm Fe²⁺ concentration and a CO₂ loading of approximately 0.48 mol CO₂/mol MEA (typical rich loading). In a first two-compartment cell a potential of -1.3V was applied. In the second two-compartment cell a potential of -0.6V was applied. Graphite cathodes of 1cm² surface area were used in both cells.

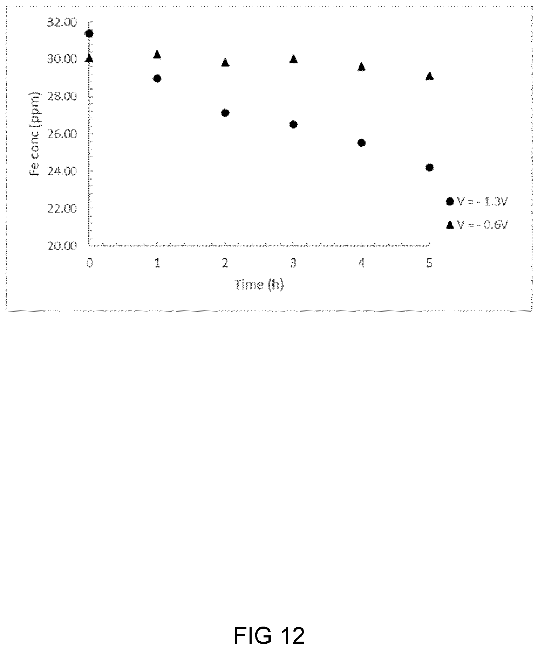

Figure 12 illustrates the concentration of Fe over time. At a potential of -1.3V the iron concentration is reduced from roughly 31 to 24 ppm in 5 hours.

### Example 2 - electrode surface area

Two experiments were carried out in a two-compartment electrochemical flow cell with 10cm² cathode surface area to determine if the increase in cathode surface area from 1cm² (Example 1) to 10cm² has an effect. Both experiments used aqueous MEA solutions. A first solution comprised approximately 75 ppm Fe²⁺, the second solution comprised approximately 35 ppm Fe²⁺. Both solutions had a CO₂ loading of roughly 0.23 mol CO₂/mol MEA (typical lean loading). The applied potential in both two-compartment cells was -1.3 V.

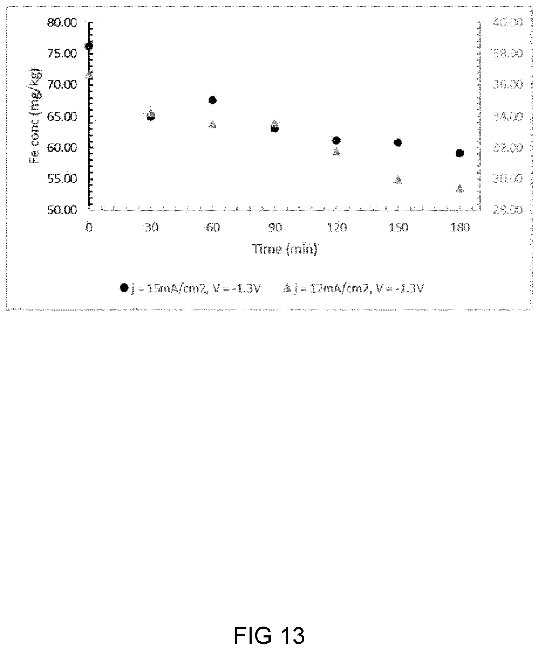

The results are illustrated in Figure 13. The iron concentration is reduced in three hours from roughly 75 to 60 ppm in the first cell. In the second cell the iron concentration is reduced from approximately 35 to 30 ppm in three hours.

### Example 3 -duration

Two batch experiments were carried out using aqueous MEA solutions in a two-compartment electrochemical flow cell. The first solution had an Fe²⁺ concentration of approximately 35 ppm and the second solution approximately 15 ppm. Both solutions had a CO₂ loading of roughly 0.25 mol CO₂/mol MEA. The applied potential in both cells was -1.3V. The cathode was a polished graphite cathode plate with a surface area of 10cm² and the anode was a Pt anode plate.

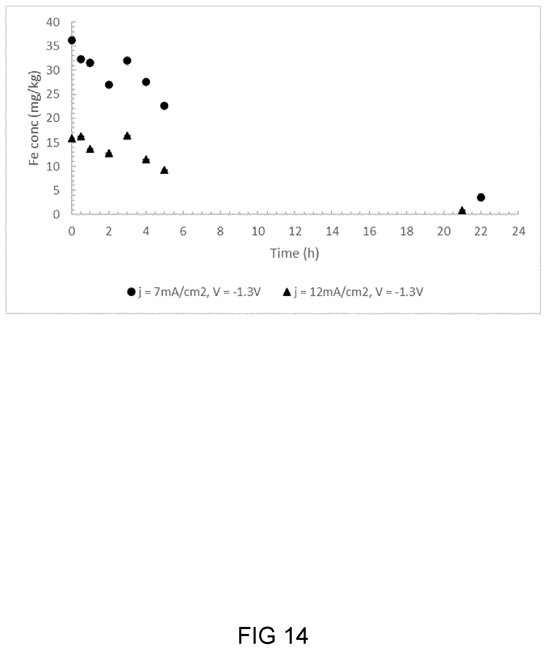

The iron concentration over time is illustrated in Figure 14. As illustrated after roughly 21 hours the iron concentration is reduced from approximately 15 to 0.1 ppm in the second cell. After approximately 22 hours the iron concentration in the first cell is reduced from roughly 35 to 3 ppm.

## Claims

1. A method for capturing CO₂ from a CO₂-containing feed gas stream, wherein the method comprises:
- providing the feed gas stream (10) in an absorber (101) comprising a solvent to absorb CO₂ in the solvent to obtain a CO₂-rich solvent stream (11) and a CO₂-lean gas stream (12);
- leading the CO₂-rich solvent stream to a regenerator (104) to obtain a CO₂-lean solvent stream (13) and a CO₂-rich gas stream (14);
wherein the CO₂-rich solvent stream and/or the CO₂-lean solvent stream comprise dissolved transition metal ions;
wherein the method further comprises at least partially removing the dissolved transition metal ions from the CO₂-rich solvent stream and/or the CO₂-lean solvent stream comprising electroreduction and deposition of the dissolved transition metal ions in an electrochemical cell (1) to obtain a metal deposit.

2. Method according to the previous claim, wherein the CO₂-rich solvent stream and the CO₂-lean solvent stream comprises a CO₂ capture solvent, preferably an amine-based liquid such as piperazine, a glycol-based liquid and/or a liquid comprising an amino-acid, more preferably an alkanolamine, most preferably aminomethyl propanol (AMP), methyl diethanolamine (MDEA), monoethanolamine (MEA) or combinations thereof such as a blend of 27 wt% AMP and 13 wt% piperazine (CESAR1).

3. Method according to any the previous claims, wherein the transition metal ions are selected from the group consisting of: iron cations, nickel cations, chromium cations, cobalt cations, manganese cations and a combination thereof, preferably wherein the transition metal ions are selected from the group consisting of: iron cations, nickel cations, chromium cations and a combination thereof, more preferably the transition metal ions are iron cations.

4. Method according to any of the previous claims, wherein the electrochemical cell (1) is a one-compartment electrochemical cell comprising a cathode (3) and an anode (5).

5. Method according to any of the previous claims 1-3, wherein the electrochemical cell (1) is a two-compartment electrochemical cell comprising a cathodic compartment (2) comprising a cathode (3) and an anodic compartment (4) comprising an anode (5), preferably wherein the electrochemical cell is a two-compartment electrochemical flow cell.

6. Method according to the previous claim, wherein the two-compartment electrochemical cell further comprises a bipolar membrane (6) comprising an anion exchange layer (7), a cation exchange layer (8) and an interface layer (9), wherein the bipolar membrane separates the anodic compartment and the cathodic compartment.

7. Method according to the previous claim, wherein the anion exchange layer (7) of the bipolar membrane (6) faces the cathodic compartment.

8. Method according to any of the previous claims, wherein the transition metal concentration in the CO₂-rich solvent stream and/or the CO₂-lean solvent stream is at least 5 ppm.

9. Method according to any of the previous claims, wherein the method further comprises:
- feeding at least part of the CO₂-rich solvent stream and/or at least part of the CO₂-lean solvent stream to the electrochemical cell (1), preferably to the cathodic compartment (2) of the electrochemical cell;
- applying the reductive potential to reduce the transition metal ions to obtain a metal deposit and a metal-lean fraction (15).

10. Method according to the previous claim, wherein the metal-lean fraction is fed to the absorber.

11. Method according to any of the previous claims, wherein the method further comprises removing the metal deposit.

12. Method according to any of the previous claims, wherein the method is a continuous method.

13. Method for at least partially removing transition metal ions from a solution, wherein the method comprises electroreduction of the metal ions in a two-compartment electrochemical cell comprising a bipolar membrane (6) comprising an anion exchange layer (7), a cation exchange layer (8) and an interface layer (9), wherein the bipolar membrane separates a cathodic compartment (2) from an anodic compartment (4), preferably wherein the anion exchange layer faces the cathodic compartment.

14. A system (100) for capturing CO₂ from a CO₂-containing feed gas stream according to the method of any of the previous claims, wherein the system comprises;
- an absorber (101) comprising a feed fluid inlet (102) and CO₂-rich solvent outlet (103);
- a regenerator (104) comprising a CO₂-rich solvent inlet (105) and a CO₂-lean solvent outlet (106);
- an electrochemical cell (1) comprising a metal-rich fraction inlet (108) and a metal-lean fraction outlet (109),
wherein the CO₂-rich solvent outlet (103) is in fluid connection with the CO₂-rich solvent inlet (105) and/or in fluid connection with the metal-rich fraction inlet (108);
wherein the CO₂-lean solvent outlet (106) is in fluid connection with the metal-rich fraction inlet (108) and/or in fluid connection with the feed fluid inlet (102);
wherein the metal-lean fraction outlet (109) is in fluid connection with the feed fluid inlet (102) and/or in fluid connection with the CO₂-rich solvent inlet (105).

15. System according to the previous claim wherein the CO₂-lean solvent outlet (106) is in fluid connection with the metal-rich fraction inlet (108), preferably wherein the CO₂-lean solvent outlet (106) is in fluid connection with the metal-rich fraction inlet (108), the metal-lean fraction outlet (109) is in fluid connection with the fluid inlet (102) and the CO₂-rich solvent outlet (103) is in fluid connection with the CO₂-rich solvent inlet (105).
